# EUROPEAN PATENT APPLICATION

(11) **EP 4 749 729 A1**
(43) Date of publication of application: **27.05.2026**
(21) Application number: 24842914.4
(22) Date of filing: 27.06.2024
(51) Int. Cl.: H01M 8/18, H01M 8/02, H01M 8/0258, H01M 8/0273, H01M 8/2483

(54) **FRAME BODY, CELL FRAME, BATTERY CELL, CELL STACK, AND REDOX FLOW BATTERY SYSTEM**

(30) Priority: 19.07.2023 JP 2023117323
(71) Applicant: Sumitomo Electric Industries, Ltd., Osaka-shi, Osaka 541-0041 (JP)
(72) Inventor: SUTO, Yoshihiko, Osaka-shi, Osaka 541-0041 (JP)
(74) Representative: Müller-Boré & Partner Patentanwälte PartG mbB
(86) International application number: PCT/JP2024/023350
(87) International publication number: WO 2025/018119

(57) **Abstract**

This plate-like frame body for use in a cell frame of a battery cell has a first main surface and a second main surface, which is the opposite surface to the first main surface, wherein: the first main surface includes a plurality of recessed portions that are open at the first main surface, and liquid grooves constituting a portion of flow passages of an electrolytic solution within the battery cell; and each of the plurality of recessed portions is distributed and arranged in a position different from that of the liquid grooves.

## Description

### TECHNICAL FIELD

The present disclosure relates to a frame body, a cell frame, a battery cell, a cell stack, and a redox flow battery system. The present application claims priority based on Japanese Patent Application No. 2023-117323 filed on July 19, 2023, and the entire contents of the Japanese patent application are incorporated herein by reference.

### BACKGROUND ART

PTL 1 discloses a frame body used in a cell frame of a battery cell included in a redox flow battery system. The cell frame includes a bipolar plate and the frame body that supports the outer periphery of the bipolar plate. The redox flow battery system includes a layered body in which a cell frame, a positive electrode, a membrane, a negative electrode, and another cell frame are sequentially stacked. In this configuration, one battery cell is formed between bipolar plates of the two adjacent cell frames.

### CITATION LIST

### PATENT LITERATURE

PTL 1: International Publication No. 2018/066095

### SUMMARY OF INVENTION

A frame body according to the present disclosure is a plate-like frame body for a cell frame of a battery cell, the frame body including a first main surface, and a second main surface opposite to the first main surface. The first main surface includes a plurality of recesses opening in the first main surface, and a liquid groove constituting a portion of a flow channel of an electrolyte in the battery cell. The plurality of recesses are disposed in a distributed manner at positions different from that of the liquid groove.

### BRIEF DESCRIPTION OF DRAWINGS

[FIG. 1] FIG. 1 is a plan view of a cell frame according to an embodiment.
[FIG. 2] FIG. 2 is a sectional view taken along line II-II in FIG. 1.
[FIG. 3] FIG. 3 is a plan view of a cell frame according to Modification 1.
[FIG. 4] FIG. 4 is a plan view of a cell frame according to Modification 2.
[FIG. 5] FIG. 5 is a plan view of a cell frame according to Modification 3.
[FIG. 6] FIG. 6 is a schematic structural view of a redox flow battery system according to an embodiment.
[FIG. 7] FIG. 7 is a schematic structural view of a cell stack according to an embodiment.
[FIG. 8] FIG. 8 is a schematic view illustrating the positional relationship between piece regions and corner regions in a frame body.

### DETAILED DESCRIPTION

### [Problems to be Solved by Present Disclosure]

An improvement in assembly performance of a battery cell has been desired. Specifically, preventing positional displacement of adjacent frame bodies has been desired.

An object of the present disclosure is to provide a frame body that achieves good assembly performance of a battery cell.

### [Advantageous Effects of Present Disclosure]

The frame body according to the present disclosure achieves good assembly performance of a battery cell.

### [Description of Embodiments of Present Disclosure]

First, embodiments of the present disclosure will be listed and described.

(1) A frame body according to an embodiment of the present disclosure is a plate-like frame body for a cell frame of a battery cell, the frame body including a first main surface, and a second main surface opposite to the first main surface. The first main surface includes a plurality of recesses opening in the first main surface, and a liquid groove constituting a portion of a flow channel of an electrolyte in the battery cell. The plurality of recesses are disposed in a distributed manner at positions different from that of the liquid groove.

The plurality of recesses provided on the frame body generate moderate frictional force between the frame body and a member in contact with the frame body when the battery cell is assembled. This frictional force can prevent positional displacement between adjacent frame bodies. When a membrane is disposed between the frame body and a frame body adjacent thereto, positional displacement between each frame body and the membrane can also be prevented. Thus, the frame body including the recesses achieves good assembly performance of the battery cell.

Moreover, each of the plurality of recesses provided on the frame body can store an excess electrolyte that may occur in the battery cell. Compared with the case where projections are provided on the first main surface, in the case of providing the recesses, a gap is not formed between frame bodies or between the frame body and a membrane. Therefore, in the frame body including the recesses, the electrolyte is less likely to leak from such a gap between the frame body and a frame body adjacent thereto to the outside of the battery cell. In the case of the frame body including the recesses, a member in contact with the frame body is less likely to be damaged, compared with the case of a frame body including projections.

(2) In the frame body according to (1) above, the first main surface may further include a sealing groove provided in an annular shape along an entire periphery of the frame body in plan view of the first main surface such that a sealing member is disposed.

When a sealing member is disposed on the first main surface, it is possible to prevent the electrolyte from leaking from a gap between the frame body and a frame body adjacent thereto to the outside of the battery cell.

(3) In the frame body according to (1) or (2) above, at least one of the plurality of recesses may have a depth of 0.1% to 10% of a maximum thickness of the frame body.

When the depth of a recess is 0.1% or more of the maximum thickness of the frame body, large frictional force can be generated between the frame body and a member in contact with the frame body by an opening edge of the recess. When the depth of a recess is 10% or less of the maximum thickness of the frame body, the strength of the frame body is sufficiently maintained. In the case where a membrane is disposed between the frame body and a frame body adjacent thereto, when the depth of a recess is 5% or less of the maximum thickness of the frame body, the membrane is likely to be prevented from entering the recess.

(4) In the frame body according to any one of (1) to (3) above, at least one of the plurality of recesses may have an opening edge having a shape constituted by a curved line in plan view of the first main surface.

When the planar shape of the opening edge of a recess is a curved shape, the planar shape of the opening edge is rounded and has no angular portions. Accordingly, a member in contact with the frame body is less likely to be damaged by the opening edge.

(5) In the frame body according to any one of (1) to (4) above, the frame body includes four piece regions and four corner regions, and each of the corner regions is located between two of the piece regions. Each of the piece regions includes an outer peripheral region within 50% of a maximum width of the piece region inward from an outer peripheral edge of the first main surface. The maximum width of the piece region is a maximum length between an inner peripheral edge and an outer peripheral edge of each of the piece regions, and at least one of the plurality of recesses may be provided in the outer peripheral region.

When a recess is provided in the outer peripheral region of the frame body, positional displacement between adjacent frame bodies or positional displacement between the frame body and a membrane is more likely to be prevented. When a recess is provided in the outer peripheral region of the frame body, an excess electrolyte reaching the vicinity of the outer peripheral edge of the frame body can be stored in the recess. Accordingly, the electrolyte is likely to be more reliably prevented from leaking from a gap between the frame body and a frame body adjacent thereto to the outside of the battery cell.

(6) In the frame body according to (2) above, the frame body includes four piece regions and four corner regions, and
each of the corner regions is located between two of the piece regions. Each of the piece regions includes an outer peripheral region within 50% of a maximum width of the piece region inward from an outer peripheral edge of the first main surface. The maximum width of the piece region is a maximum length between an inner peripheral edge and an outer peripheral edge of each of the piece regions. The sealing groove is disposed in the outer peripheral region, and at least one of the plurality of recesses may be provided in a vicinity of the sealing groove.

When a recess is provided in the vicinity of the sealing groove, the electrolyte can be stored in the recess in the vicinity of the sealing groove. Consequently, the electrolyte is likely to be prevented from leaking from a gap between the frame body and a frame body adjacent thereto to the outside of the battery cell.

(7) In the frame body according to any one of (1) to (6) above, the frame body includes four piece regions and four corner regions, and each of the corner regions is located between two of the piece regions. Each of the piece regions includes an inner peripheral region within 50% of a maximum width of the piece region outward from an inner peripheral edge of the first main surface. The maximum width of the piece region is a maximum length between an inner peripheral edge and an outer peripheral edge of each of the piece regions. At least one of the plurality of recesses may be provided in the inner peripheral region.

When a recess is provided in the inner peripheral region of the frame body, positional displacement between frame bodies that may occur in the inner peripheral region can be prevented. Even in the case where an outer peripheral edge of a membrane is located in the inner peripheral edge of the frame body and the vicinity thereof, positional displacement between the frame body and the membrane can be prevented. When a recess is provided in the inner peripheral region of the frame body, an excess electrolyte can be stored in the recess in the inner peripheral region of the frame body.

(8) In the frame body according to any one of (1) to (7) above, at least two of the plurality of recesses may be provided at symmetrical positions with respect to a through-hole provided in the frame body.

The positions symmetrical to a through-hole correspond to positions facing with each other with a through-hole provided therebetween. A bipolar plate is disposed in the through-hole provided in the frame body. When recesses are provided at positions facing with each other with the through-hole provided therebetween, positional displacement between frame bodies is likely to be prevented. When a membrane is disposed between the frame body and a frame body adjacent thereto, positional displacement between each frame body and the membrane is also likely to be prevented.

(9) In the frame body according to any one of (1) to (8) above, at least one of the plurality of recesses may be provided in a vicinity of the liquid groove.

When a recess is provided in the vicinity of the liquid groove, an excess electrolyte from the liquid groove can be stored in the recess.

(10) In the frame body according to any one of (1) to (9) above, a manifold constituting a portion of the flow channel of the electrolyte may be further included, and at least one of the plurality of recesses may be provided in a vicinity of the manifold.

When a recess is provided in the vicinity of the manifold, positional displacement between manifolds of adjacent frame bodies can be prevented.

(11) In the frame body according to any one of (1) to (10) above, at least one of the plurality of recesses may have an opening area of 7 mm² to 7,855 mm².

When a recess has an opening area of 7 mm² or more, large frictional force can be generated between the frame body and a member in contact with the frame body. When a recess has an opening area of 7,855 mm² or less, the strength of the frame body is ensured. In the case where a membrane is disposed between the frame body and a frame body adjacent thereto, when the opening area of a recess is 7,855 mm² or less, the membrane is likely to be prevented from entering the recess.

(12) In the frame body according to any one of (1) to (11) above, in plan view of the first main surface, the number of opening edges of each of the recesses may be one.

With the recesses whose number of opening edges is one, frictional force can be generated between the frame body and a frame body adjacent thereto to prevent positional displacement between the frame body and the frame body adjacent thereto. When a membrane is disposed between the frame body and a frame body adjacent thereto, positional displacement between each frame body and the membrane can also be prevented.

(13) A cell frame according to an embodiment of the present disclosure includes the frame body according to any one of (1) to (12) above and a bipolar plate supported by the frame body.

The cell frame includes the above frame body and thus achieves good assembly performance of a battery cell.

(14) A battery cell according to an embodiment of the present disclosure includes the cell frame according to (13) above.

The battery cell includes the above cell frame and thus has good assembly performance.

(15) A cell stack according to an embodiment of the present disclosure includes the battery cell according to (14) above.

The cell stack includes the above battery cell and thus has good assembly performance.

(16) A redox flow battery system according to an embodiment of the present disclosure includes the battery cell according to (14) above or the cell stack according to (15) above.

The redox flow battery system includes the above battery cell or the cell stack and thus has good assembly performance of the battery cell and the cell stack.

### [Details of Embodiments of Present Disclosure]

Specific examples of a frame body, a cell frame, a battery cell, a cell stack, and a redox flow battery system according to the present disclosure will be described with reference to the drawings. In the drawings, the same reference signs denote the same or corresponding parts. In the drawings, a part of the configuration may be illustrated in an exaggerated or simplified manner for convenience of description. Ratios of dimensions of components in the drawings may be different from actual ratios. It should be noted that the present invention is not limited to the examples, but is defined by the appended claims, and is intended to include all modifications that fall within the scope of the claims and the equivalents thereof. Hereinafter, a redox flow battery may be referred to as an "RF battery".

### <Frame body>

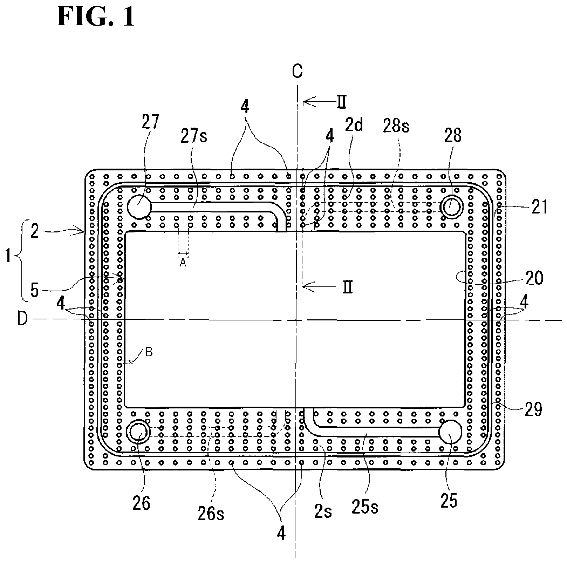

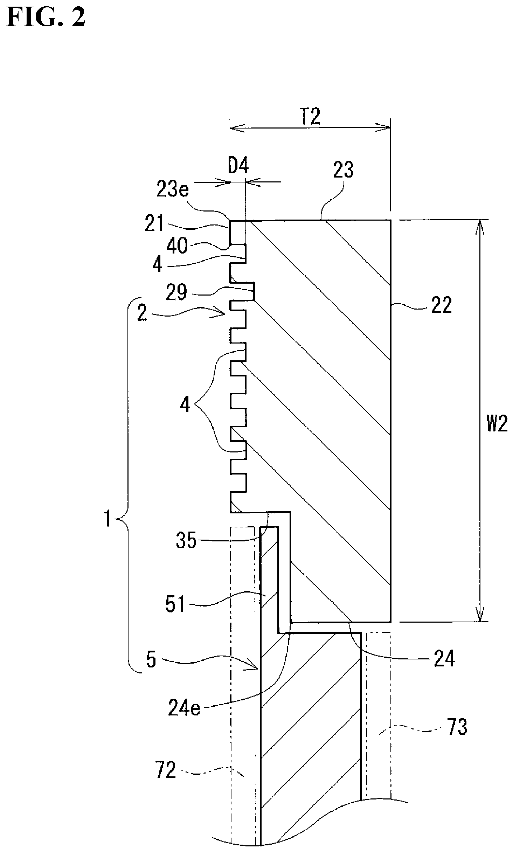

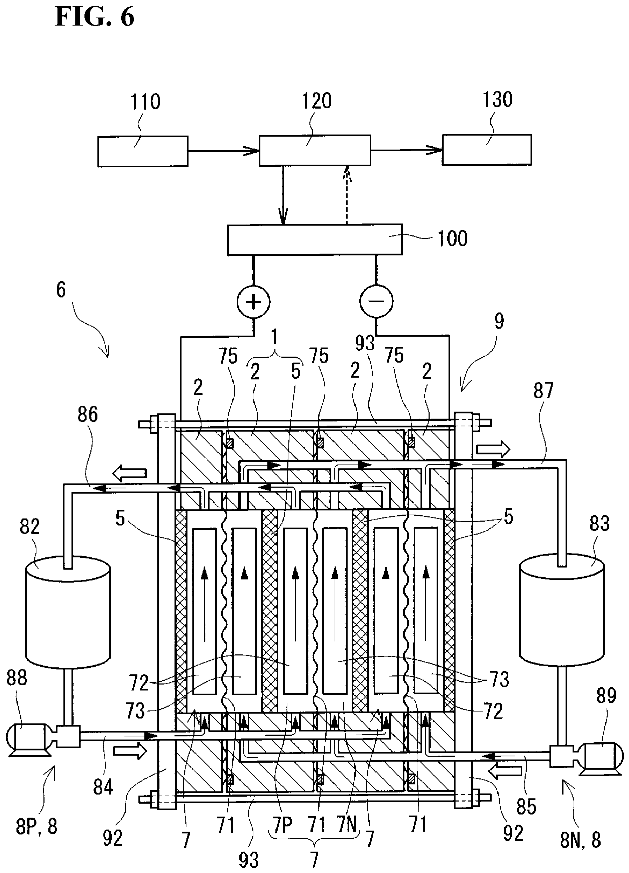

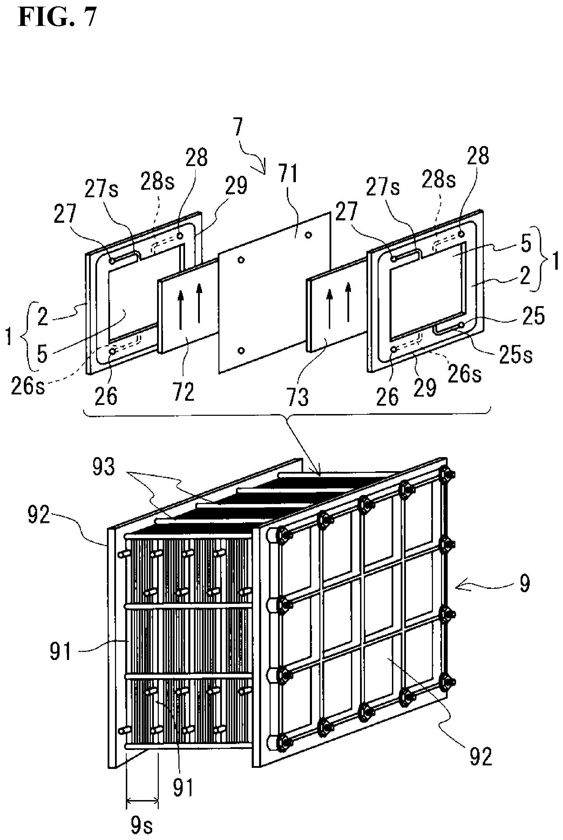

A frame body 2 according to an embodiment will be described with reference to FIGS. 1 and 2. The frame body 2 is a component of a cell frame 1. The cell frame 1 is a component of an RF battery system 6 described later with reference to FIGS. 6 and 7. A feature of the frame body 2 of the embodiment lies in that a first main surface 21 of the frame body 2 includes a plurality of recesses 4.

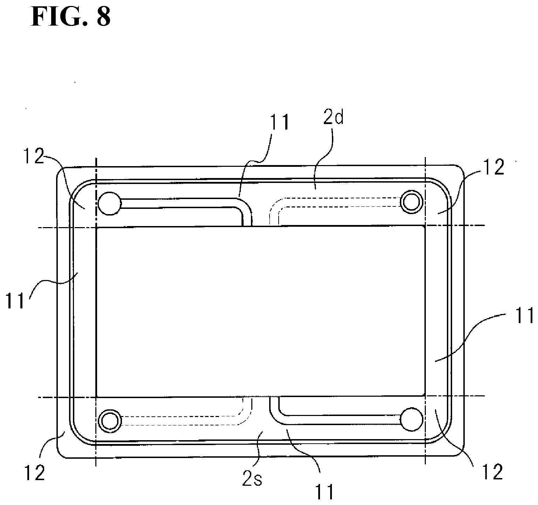

The frame body 2 is a plate-like member. The frame body 2 has a through-hole 20 extending through a central portion of the frame body 2 in the thickness direction. As illustrated in FIG. 2, the frame body 2 includes a first main surface 21, a second main surface 22, an outer peripheral surface 23, and an inner peripheral surface 24. The frame body 2 includes four piece regions 11 and four corner regions 12. Each of the corner regions is located between two of the piece regions. The shape in the plane of the outer peripheral edge of the frame body 2 is a rectangle. The four piece regions 11 and the four corner regions 12 are not members that are independent from each other. The four piece regions 11 and the four corner regions 12 are integrated with each other to form the frame body 2. FIG. 8 schematically illustrates the positional relationship between the piece regions 11 and the corner regions 12 in the frame body 2.

Reference is made to FIGS. 1 and 2. The first main surface 21 and the second main surface 22 constitute the front and back of the frame body 2. Each of the first main surface 21 and the second main surface 22 is a surface facing another frame body disposed adjacent to the frame body 2. The frame body 2 has a through-hole 20. Each of the first main surface 21 and the second main surface 22 has an inner peripheral edge. The inner peripheral edge is the same as an opening edge of the through-hole 20. The through-hole 20 includes axes of the frame body 2. A bipolar plate 5 described later is disposed in the through-hole 20. Each of the first main surface 21 and the second main surface 22 includes a flat surface. The first main surface 21 and the second main surface 22 are provided such that their flat surface portions are parallel to each other. Adjacent frame bodies 2 are stacked such that the flat surface portions of the first main surface 21 and the second main surface 22 face each other.

The outer peripheral surface 23 is continuous with the first main surface 21 and the second main surface 22 and constitutes the outer shape of the frame body 2. The inner peripheral surface 24 is continuous with the first main surface 21 and the second main surface 22 and constitutes the through-hole 20. The frame body 2 illustrated in FIG. 1 has a rectangular outer shape in plan view, and the through-hole 20 also has a rectangular shape. The outer shape of the frame body 2 and the shape of the through-hole 20 can be appropriately selected.

A maximum thickness T2 of the frame body 2 is, for example, 3 mm to 15 mm. The maximum thickness T2 refers to the maximum length among the distances between the first main surface 21 and the second main surface 22. When the maximum thickness T2 is 3 mm or more, the frame body 2 has high mechanical strength. When the maximum thickness T2 is 15 mm or less, the size of a battery cell 7 (FIG. 6 and the upper drawing of FIG. 7) including frame bodies 2 can be prevented from being excessively large, and furthermore, the size of a cell stack 9 (FIG. 6 and the lower drawing of FIG. 7) including the battery cell 7 can be prevented from being excessively large. The maximum thickness T2 may be 4 mm to 14 mm, or 5 mm to 13 mm.

The four piece regions 11 include a supply piece region 2s and a discharge piece region 2d. The supply piece region 2s and the discharge piece region 2d are disposed so as to face each other with the through-hole 20 therebetween in plan view. In the frame body 2 illustrated in FIG. 2, the supply piece region 2s is located below and the discharge piece region 2d is located above.

The first main surface 21 includes a supply channel and a discharge channel of an electrolyte. The supply channel is provided in the supply piece region 2s, and the discharge channel is provided in the discharge piece region 2d. The supply channel and the discharge channel are constituted by a liquid groove and a manifold provided in the first main surface 21. In other words, the first main surface 21 includes a liquid groove and a manifold constituting a portion of a flow channel of an electrolyte in the battery cell 7 (FIG. 6). The liquid groove includes a liquid supply slit 25s and a liquid discharge slit 27s illustrated in FIG. 1. The manifold includes a liquid supply manifold 25 and a liquid discharge manifold 27 illustrated in FIG. 1.

The liquid supply manifold 25 and the liquid supply slit 25s constitute the supply channel of the first main surface 21. The liquid supply manifold 25 is a supply port of the electrolyte. The liquid supply manifold 25 extends through the first main surface 21 and the second main surface 22. The liquid supply manifold 25 and the through-hole 20 communicate with each other through the liquid supply slit 25s. The liquid groove may further include a liquid supply-straightening portion, which is not illustrated. When the liquid supply-straightening portion is provided on the frame body 2, the liquid supply-straightening portion is provided along the inner peripheral edge of the first main surface 21. When the liquid supply-straightening portion is provided, the liquid supply slit 25s connects the liquid supply manifold 25 and the liquid supply-straightening portion. The liquid supply-straightening portion diffuses the electrolyte flowing from the liquid supply slit 25s along the inner peripheral edge of the first main surface 21. The liquid supply-straightening portion may be provided on the bipolar plate 5.

The liquid discharge manifold 27 and the liquid discharge slit 27s constitute the discharge channel of the first main surface 21. The liquid discharge manifold 27 is a discharge port of the electrolyte. The liquid discharge manifold 27 extends through the first main surface 21 and the second main surface 22. The liquid discharge manifold 27 and the through-hole 20 communicate with each other through the liquid discharge slit 27s. The liquid groove may further include a liquid discharge-straightening portion, which is not illustrated. When the liquid discharge-straightening portion is provided, the liquid discharge-straightening portion is provided along the inner peripheral edge of the first main surface 21. When the liquid discharge-straightening portion is provided on the frame body 2, the liquid discharge slit 27s connects the liquid discharge manifold 27 and the liquid discharge-straightening portion. The liquid discharge-straightening portion gathers the electrolyte flowing from a positive electrode 72 or a negative electrode 73 that is described later and disposed on the bipolar plate 5 along the inner peripheral edge of the first main surface 21 and causes the electrolyte to flow through the liquid discharge slit 27s. The liquid discharge-straightening portion may be provided on the bipolar plate 5.

The first main surface 21 further includes a sealing groove 29. The sealing groove 29 is provided in an annular shape along the entire periphery of the frame body 2 such that a sealing member 75 (FIG. 6) described later is disposed. The sealing groove 29 is provided so as to surround the supply channel (the liquid supply manifold 25, the liquid supply slit 25s, etc.) of the electrolyte and the discharge channel (the liquid discharge manifold 27, the liquid discharge slit 27s, etc.).

The first main surface 21 has a plurality of recesses 4 that open in the first main surface 21. Each of the recesses 4 is not a through-hole extending through the first main surface 21 and the second main surface 22. Each of the recesses 4 is a blind hole that opens in the first main surface 21 but that does not open in the second main surface 22. The recesses 4 are not integrated along the entire periphery of the frame body 2 in plan view of the first main surface 21. The recesses 4 are not arranged so as to form an annular shape along the entire periphery of the frame body 2 in plan view of the first main surface 21. The recesses 4 are provided independently from the liquid groove. The recesses 4 are disposed in a distributed manner at positions different from that of the liquid groove. The recesses 4 are provided to be spaced apart from each other.

The recesses 4 are provided independently from the liquid groove and the manifold. The recesses 4 are provided to be spaced apart from the liquid groove and the manifold. When the first main surface 21 includes the sealing groove 29, the recesses 4 are provided independently from the sealing groove 29. The recesses 4 are provided to be spaced apart from the sealing groove 29. The plurality of recesses 4 are recesses other than the liquid groove and the manifold constituting a portion of the flow channel of the electrolyte in the battery cell 7 (FIG. 6), and the sealing groove 29. In plan view of the first main surface 21, the number of opening edges of each of the plurality of recesses 4 is one. In an annular groove such as the sealing groove 29, the number of opening edges is two. Therefore, such an annular groove is not a recess 4.

An opening edge 40 of each recess 4 is provided on the first main surface 21. Each recess 4 including the opening edge 40 has a function of generating moderate frictional force between the frame body 2 and a member in contact with the frame body 2. For example, when the battery cell 7 described later is assembled, frictional force can be generated between adjacent frame bodies 2 to prevent positional displacement between the frame bodies 2. When a membrane 71 described later is disposed between the frame body 2 and another frame body 2 adjacent thereto, positional displacement between each frame body 2 and the membrane 71 can also be prevented.

A ratio of the major axis length to the minor axis length (major axis length/minor axis length) of the opening edge 40 of the recess 4 is, for example, 0.5 to 2.0. If the opening edge 40 is a perfect circle in plan view of the first main surface 21, the above ratio is 1. The closer the ratio of the major axis length to the minor axis length of the opening edge 40 is to 1, the closer the shape of the opening edge 40 of the recess 4 is to a perfect circle. It should be noted that the ratio of the major axis length to the minor axis length of each of the liquid groove and the sealing groove 29 exceeds 2.0. In each of the liquid groove and the sealing groove 29, the minor axis length is the shortest length of the opening edge in plan view of the first main surface 21. The major axis length is the maximum length in the direction orthogonal to the minor axis length.

At least one of the plurality of recesses 4 may have a depth D4 of 0.1% to 10% of the maximum thickness T2 of the frame body 2. The depth D4 is the length to the deepest point of a recess 4 within the range of a reference line, which is a straight line connecting two opposing points on the opening edge 40 of the recess 4. The recess 4 having a depth D4 in the above range is a recess that is sufficiently shallower than the liquid groove and the sealing groove 29. When the depth D4 is 0.1% or more of the maximum thickness T2, the first main surface 21 can be provided with the opening edge 40. This enables large frictional force to be generated between the frame body 2 and a member in contact with the frame body 2. When the depth D4 is 10% or less of the maximum thickness T2, the strength of the frame body 2 is sufficiently maintained. In the case where a membrane 71 is disposed between the frame body 2 and another frame body 2 adjacent thereto, when the depth D4 is 10% or less of the maximum thickness T2, the membrane 71 is likely to be prevented from entering the recess 4. The depth D4 may be 0.3% to 10%, or 0.5% to 10% of the maximum thickness T2.

The number of the recesses 4 having a depth D4 in the above range is, for example, 50% or more of the total number of the recesses 4. The number of the recesses 4 having a depth D4 in the above range may be 70% or more, 80% or more, or 90% or more of the total number of the recesses 4. All of the recesses 4 may have a depth D4 in the above range.

The depth D4 is, for example, 0.05 mm to 1.0 mm. When the depth D4 is 0.05 mm or more, the first main surface 21 can be provided with the opening edge 40. This enables large frictional force to be generated between the frame body 2 and a member in contact with the frame body 2. When the depth D4 is 1.0 mm or less, the strength of the frame body 2 is sufficiently maintained. In the case where a membrane 71 is disposed between the frame body 2 and another frame body 2 adjacent thereto, when the depth D4 is 1.0 mm or less, the membrane 71 is likely to be prevented from entering the recess 4. The depth D4 may be 0.08 mm to 0.8 mm, or 0.1 mm to 0.5 mm.

At least one of the plurality of recesses 4 may have an opening edge 40 having a shape constituted by a curved line in plan view of the frame body 2. When the planar shape of the opening edge 40 is a curved shape, the planar shape of the opening edge 40 is rounded and has no angular portions. As a result, a member in contact with the frame body 2 is less likely to be damaged by the opening edge 40. The shape constituted by a curved line is, for example, a circular shape or an elliptical shape. The number of the recesses 4 having an opening edge 40 constituted by a curved line is, for example, 50% or more of the total number of the recesses 4. The number of the recesses 4 having an opening edge 40 constituted by a curved line may be 70% or more, 80% or more, or 90% or more of the total number of the recesses 4. All of the recesses 4 may have an opening edge 40 constituted by a curved line. As illustrated in FIG. 1, the planar shapes of the opening edges 40 of all of the recesses 4 are each a circular shape. At least one of the plurality of the recesses 4 may include an opening edge 40 having a polygonal planar shape.

At least one of the plurality of recesses 4 may have an opening area of 7 mm² to 7,855 mm². The opening area is the area of an opening portion of a recess 4 in plan view of the first main surface 21. When the opening area of the recess 4 is 7 mm² or more, the first main surface 21 can be provided with the opening edge 40. This enables large frictional force to be generated between the frame body 2 and a member in contact with the frame body 2. When the opening area of the recess 4 is 7,855 mm² or less, the strength of the frame body 2 is sufficiently maintained. In the case where a membrane 71 is disposed between the frame body 2 and another frame body 2 adjacent thereto, when the opening area of the recess 4 is 7,855 mm² or less, the membrane 71 is likely to be prevented from entering the recess 4. The opening area may be 19 mm² to 1,963 mm², or 19 mm² to 707 mm². In other words, the equivalent circle diameter of the opening area of the recess 4 may be 3 mm to 100 mm, 5 mm to 50 mm, or 5 mm to 30 mm. The equivalent circle diameter refers to the diameter of a perfect circle having the opening area of the recess 4. The number of the recesses 4 having an opening area in the above range is, for example, 50% or more of the total number of the recesses 4. The number of the recesses 4 having an opening area in the above range may be 70% or more, 80% or more, or 90% or more of the total number of the recesses 4. All of the recesses 4 may have an opening area in the above range.

The plurality of recesses 4 are provided, for example, in a distributed manner on the first main surface 21. The expression "the plurality of recesses 4 are provided in a distributed manner" means that the plurality of recesses 4 are not unevenly provided on the first main surface 21, but are evenly distributed over the entirety of the first main surface 21. Adjacent recesses 4 are provided at certain intervals. Adjacent recesses 4 are provided, for example, at intervals of 5 mm to 50 mm. The interval is the shortest distance between the opening edges 40 of adjacent recesses 4. When the interval is 5 mm or more, the number of the recesses 4 is not excessively large, and the strength of the frame body 2 is sufficiently ensured. When the interval is 50 mm or less, frictional force is easily generated between the frame body 2 and a member in contact with the frame body 2. The interval may be 6 mm to 45 mm, or 10 mm to 40 mm.

In FIG. 1, intervals A between recesses 4 that are adjacent to each other in the left-right direction in the plane of the drawing are equal, and intervals B of recesses 4 that are adjacent each other in the top-bottom direction in the plane of the drawing are equal. The interval A is larger than the interval B. The interval A and the interval B may be equal to each other, or the interval A may be smaller than the interval B. The recesses 4 may be randomly arranged over the entirety of the first main surface 21.

On the first main surface 21, recesses 4 having the same size and shape may be arranged, or recesses 4 having different sizes and shapes may be arranged. As illustrated in FIGS. 1 and 2, the size of each recess 4 includes the depth D4 and the opening area of the recess 4. FIG. 1 illustrates an example in which recesses 4 having the same size and shape are regularly arranged. However, in other embodiments of the present disclosure, recesses having the same size and shape may be randomly arranged. Recesses 4 having different sizes and shapes may be included. The plurality of recesses 4 may include pairs of recesses 4 that are recesses 4 adjacent to each other and arranged at different intervals.

The number of recesses 4 is, for example, 10 to 250. When the number of recesses 4 is 10 or more, large frictional force can be generated between the frame body 2 and a member in contact with the frame body 2. When the number of recesses 4 is 250 or less, the strength of the frame body 2 is sufficiently ensured. The number of recesses 4 may be 15 to 230, 20 to 200, or 30 to 180.

A maximum width W2 of the four piece regions 11 is the maximum length among the distances between the outer peripheral surface 23 and the inner peripheral surface 24 (the distances between an outer peripheral edge 23e and an inner peripheral edge 24e) in the piece regions 11. A region within 50% of the maximum width W2 of each piece region 11 from the outer peripheral edge 23e of the first main surface 21 is referred to as an outer peripheral region. A region within 50% of the maximum width W2 of each piece region 11 from the inner peripheral edge 24e of the first main surface 21 is referred to as an inner peripheral region.

At least one of the plurality of recesses 4 is provided, for example, in the outer peripheral region. When a recess 4 is provided in the outer peripheral region, positional displacement between adjacent frame bodies 2 or positional displacement between the frame body 2 and a membrane 71 is more likely to be prevented. When a recess 4 is provided in the outer peripheral region, an excess electrolyte reaching the vicinity of the outer peripheral edge 23e can be stored in the recess 4 because the outer peripheral region includes the vicinity of the outer peripheral edge 23e. The vicinity of the outer peripheral edge 23e is a region within 25% of the maximum width W2 of the frame body 2 from the outer peripheral edge 23e. At least one of the plurality of recesses 4 may be provided in a region within 40% of the maximum width W2 from the outer peripheral edge 23e, or further, may be provided in a region within 30%.

The number of the recesses 4 provided in the outer peripheral region is, for example, 40% to 80% of the total number of the recesses 4. When 40% or more of the total number of the recesses 4 are provided in the outer peripheral region, positional displacement between adjacent frame bodies 2 or positional displacement between the frame body 2 and a membrane 71 is more likely to be prevented. When 80% or less of the total number of the recesses 4 are provided in the outer peripheral region, positional displacement between frame bodies 2 that may occur in the inner peripheral region of the frame bodies 2 can be prevented. That is, when more than 20% of the total number of the recesses 4 are provided in the inner peripheral region, positional displacement between frame bodies 2 that may occur in the inner peripheral region of the frame bodies 2 can be prevented. The number of the recesses 4 provided in the outer peripheral region may be 45% to 75%, or 50% to 70% of the total number of the recesses 4. A recess 4 provided across a boundary line between the outer peripheral region and the inner peripheral region is a recess 4 provided in the outer peripheral region and is also a recess 4 provided in the inner peripheral region.

At least one of the plurality of recesses 4 is provided, for example, in the inner peripheral region. When a recess 4 is provided in the inner peripheral region, positional displacement between frame bodies 2 that may occur in the inner peripheral region can be prevented. Even when an outer peripheral edge of a membrane 71 is located in the inner peripheral region, positional displacement between the frame body 2 and the membrane 71 can be prevented. When a recess 4 is provided in the inner peripheral region, an excess electrolyte can be stored in the recess 4 in the vicinity of the inner peripheral edge 24e because the inner peripheral region includes the vicinity of the inner peripheral edge 24e. The vicinity of the inner peripheral edge 24e is a region within 25% of the maximum width W2 of the frame body 2 from the inner peripheral edge 24e. At least one of the plurality of recesses 4 may be provided in a region within 40% of the maximum width W2 from the inner peripheral edge 24e, or further, may be provided in a region within 30%.

The number of the recesses 4 provided in the inner peripheral region is, for example, more than 20% and less than 60% of the total number of the recesses 4. When more than 20% of the total number of the recesses 4 are provided in the inner peripheral region, positional displacement between frame bodies 2 that may occur in the inner peripheral region is more likely to be prevented. When less than 60% of the total number of the recesses 4 are provided in the inner peripheral region, positional displacement between frame bodies 2 in the outer peripheral region can be prevented. That is, when 40% or more of the total number of the recesses 4 are provided in the outer peripheral region, positional displacement between frame bodies 2 in the outer peripheral region can be prevented. The number of the recesses 4 provided in the inner peripheral region may be 25% to 55%, more than 25% and less than 55%, 30% to 50%, or more than 30% and less than 50% of the total number of the recesses 4.

At least one of the plurality of recesses 4 is provided, for example, in the vicinity of each of the liquid supply manifolds 25 and 26 and the liquid discharge manifolds 27 and 28. The vicinity of each of the liquid supply manifolds 25 and 26 and the liquid discharge manifolds 27 and 28 is a region from each of the opening edges of the liquid supply manifolds 25 and 26 and the liquid discharge manifolds 27 and 28 to a predetermined length on the first main surface 21. The predetermined length is a length that is 50% of the diameter R of each of the manifolds 25, 26, 27, and 28. When a recess 4 is provided in the vicinity of each of the liquid supply manifolds 25 and 26 and the liquid discharge manifolds 27 and 28, positional displacement between liquid supply manifolds 25, between liquid supply manifolds 26, between liquid discharge manifolds 27, and between liquid discharge manifolds 28 of adjacent frame bodies 2 can be prevented. At least one of the plurality of recesses 4 may be provided in a region from the opening edge of each of the liquid supply manifolds 25 and 26 and the liquid discharge manifolds 27 and 28 to a point at a distance of 40% of the diameter R. A plurality of recesses 4 may be provided in the vicinity of each of the liquid supply manifolds 25 and 26 and the liquid discharge manifolds 27 and 28. As illustrated in FIG. 1 as an example, the plurality of recesses 4 may be provided at symmetrical positions with respect to each of the liquid supply manifolds 25 and 26 and the liquid discharge manifolds 27 and 28.

At least one of the plurality of recesses 4 is provided, for example, in the vicinity of the liquid groove. The vicinity of the liquid groove is a region from the opening edge of the liquid groove to a point at a distance eight times the minimum width of the liquid groove. At least one of the plurality of recesses 4 is provided, for example, in the vicinity of each of the liquid supply slit 25s and the liquid discharge slit 27s. The vicinity of each of the liquid supply slit 25s and the liquid discharge slit 27s is a region from each of the opening edges of the liquid supply slit 25s and the liquid discharge slit 27s to a point at a distance eight times the minimum width of each of the slits 25s and 27s. In FIG. 1, a plurality of recesses 4 provided in the vicinity of each of the liquid supply slit 25s and the liquid discharge slit 27s include recesses 4 provided in the inner peripheral region and recesses 4 provided in the outer peripheral region. When a recess 4 is provided in the vicinity of each of the liquid supply slit 25s and the liquid discharge slit 27s, an excess electrolyte from the liquid supply slit 25s or the liquid discharge slit 27s can be stored in the recess 4. At least one of the plurality of recesses 4 may be provided in a region from each of the opening edges of the liquid supply slit 25s and the liquid discharge slit 27s to a point at a distance five times the minimum width of each of the slits 25s and 27s. A plurality of recesses 4 may be provided in the vicinity of each of the liquid supply slit 25s and the liquid discharge slit 27s. For example, a plurality of recesses 4 may be provided along the length of each of the liquid supply slit 25s and the liquid discharge slit 27s at predetermined intervals. When the frame body 2 includes a liquid supply-straightening portion and a liquid discharge-straightening portion, which are not illustrated, at least one of the plurality of recesses 4 may be provided in the vicinity of each of the liquid supply-straightening portion and the liquid discharge-straightening portion. The vicinity of each of the liquid supply-straightening portion and the liquid discharge-straightening portion is a region from each of the opening edges of the liquid supply-straightening portion and the liquid discharge-straightening portion to a point at a distance double the minimum width of each of the-straightening portions.

At least one of the plurality of recesses 4 is provided, for example, in the vicinity of the sealing groove 29. The vicinity of the sealing groove is a region from the opening edge of the sealing groove 29 to a point at a distance eight times the maximum width of the sealing groove 29. The sealing groove 29 is provided, for example, in the outer peripheral region. In FIG. 1, recesses 4 provided in the vicinity of the sealing groove 29 are also recesses 4 provided in the outer peripheral region. When a recess 4 is provided in the vicinity of the sealing groove 29, an electrolyte can be stored in the recess 4 in the vicinity of the sealing groove 29, and the electrolyte is likely to be prevented from leaking from a gap between the frame body 2 and another frame body 2 adjacent thereto to the outside of the battery cell 7. At least one of the plurality of recesses 4 may be provided in a region from the opening edge of the sealing groove 29 to a point at a distance five times the maximum width of the sealing groove 29. A plurality of recesses 4 may be provided in the vicinity of the sealing groove 29. For example, a plurality of recesses 4 may be provided along the length of the sealing groove 29 at predetermined intervals.

At least two of the plurality of recesses 4 are provided, for example, so as to be symmetrical with respect to the through-hole 20. Herein, "being symmetrical" refers to, in FIG. 1, being line-symmetrical with respect to a symmetry axis C, being line-symmetrical with respect to a symmetry axis D, or both. Thus, positional displacement between frame bodies 2 is more likely to be prevented by the recesses 4. When a membrane 71 is disposed between the frame body 2 and another frame body 2 adjacent thereto, positional displacement between each frame body 2 and the membrane 71 is also likely to be prevented. As illustrated in FIG. 1 as an example, a plurality of pairs of recesses 4 may be provided at symmetrical positions with respect to the through-hole 20.

The second main surface 22 includes a supply channel and a discharge channel of an electrolyte as in the first main surface 21. The supply channel and the discharge channel are constituted by a liquid groove and a manifold provided in the second main surface 22. In other words, the second main surface 22 includes a liquid groove and a manifold constituting a portion of a flow channel of an electrolyte in the battery cell 7 (FIG. 6). The liquid groove includes a liquid supply slit 26s and a liquid discharge slit 28s illustrated in FIG. 1. The liquid groove may further include a liquid supply-straightening portion and a liquid discharge-straightening portion, which are not illustrated. The liquid supply-straightening portion and the liquid discharge-straightening portion may be provided on the bipolar plate 5. The manifold includes a liquid supply manifold 26 and a liquid discharge manifold 28 illustrated in FIG. 1.

The liquid supply manifold 26 and the liquid supply slit 26s constitute the supply channel of the second main surface 22. The liquid discharge manifold 28 and the liquid discharge slit 28s constitute the discharge channel of the second main surface 22. In FIG. 1, the liquid supply slit 26s and the liquid discharge slit 28s are shown by the broken lines. If the electrolyte flowing through the supply channel and the discharge channel of the first main surface 21 is a positive electrolyte, the electrolyte flowing through the supply channel and the discharge channel of the second main surface 22 is a negative electrolyte. If the electrolyte flowing through the supply channel and the discharge channel of the first main surface 21 is a negative electrolyte, the electrolyte flowing through the supply channel and the discharge channel of the second main surface 22 is a positive electrolyte. The second main surface 22 may include or does not necessarily include a sealing groove, which is not illustrated.

The second main surface 22 may include or does not necessarily include recesses as in the recesses 4 provided on the first main surface 21. The second main surface 22 of this example does not include recesses.

The frame body 2 has a cutout 35 provided at a corner portion formed by the first main surface 21 and the inner peripheral surface 24. The cutout 35 has a function of supporting a bipolar plate 5 described later. The cutout 35 constitutes a step in which the bipolar plate 5 is fitted. Fitting the bipolar plate 5 into this step easily determines the position of the bipolar plate 5 with respect to the frame body 2. The surface constituting the cutout 35 is a portion of the inner peripheral surface 24.

The frame body 2 is made of an electrical insulating material. The electrical insulating material is, for example, a resin such as a thermoplastic resin. A specific example of the electrical insulating material is one resin selected from the group consisting of vinyl chloride, polypropylene, polyethylene, fluorine resins, epoxy resins, acrylonitrile-butadiene-styrene, vinylidene chloride, polyamides, polyesters, polystyrene, acrylic resins, polyvinyl alcohol, diacetates, triacetates, and polycarbonates. The frame body 2 is an injection molded product produced by injection molding.

### <<Modification 1>>

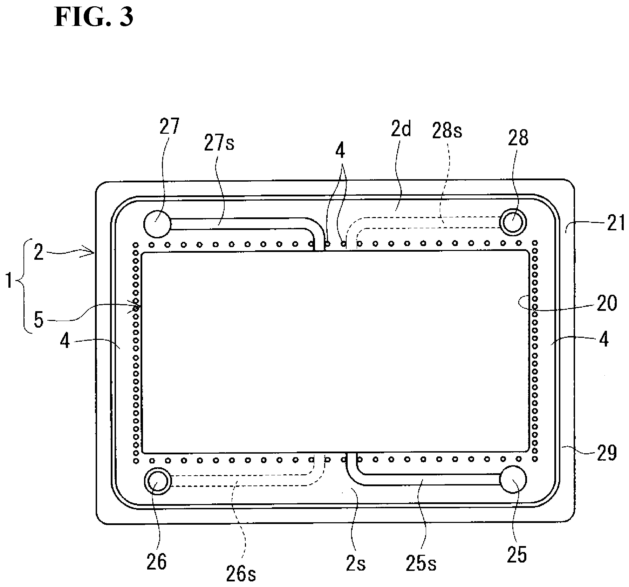

As illustrated in FIG. 3, all of the plurality of recesses 4 may be provided in the inner peripheral region. The plurality of recesses 4 provided in the inner peripheral region may be provided at predetermined intervals along the entire periphery of the frame body 2. The plurality of recesses 4 provided in the inner peripheral region may include pairs of recesses 4 provided at symmetrical positions with respect to the through-hole 20. The plurality of recesses 4 provided in the inner peripheral region can prevent positional displacement between frame bodies 2 that may occur in the inner peripheral region. When an outer peripheral edge of a membrane 71 is located in the inner peripheral region, the plurality of recesses 4 provided in the inner peripheral region can prevent positional displacement between the frame body 2 and the membrane 71. Since the inner peripheral region includes the vicinity of the inner peripheral edge 24e, the recesses 4 provided in the inner peripheral region can store an excess electrolyte in the recesses 4 in the vicinity of the inner peripheral edge 24e. In Modification 1, all of the plurality of recesses 4 are disposed inside the liquid supply manifold 25, a portion of the liquid supply slit 25s, the liquid discharge manifold 27, a portion of the liquid discharge slit 27s, and the sealing groove 29.

### <<Modification 2>>

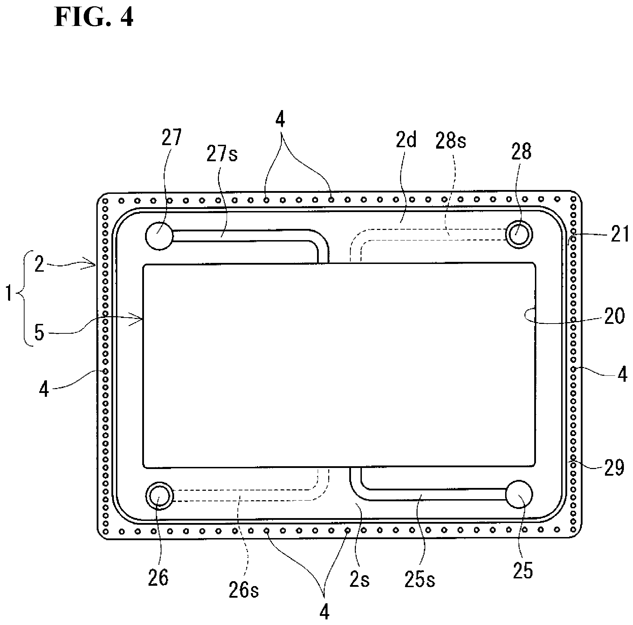

As illustrated in FIG. 4, all of the plurality of recesses 4 may be provided in the outer peripheral region. The plurality of recesses 4 provided in the outer peripheral region may be provided at predetermined intervals along the entire periphery of the frame body 2. The plurality of recesses 4 provided in the outer peripheral region may include pairs of recesses 4 provided at symmetrical positions with respect to the through-hole 20. The plurality of recesses 4 provided in the outer peripheral region can prevent positional displacement between frame bodies 2 that may occur in the outer peripheral region. When an outer peripheral edge of a membrane 71 is located in the outer peripheral region, the plurality of recesses 4 provided in the outer peripheral region can prevent positional displacement between the frame body 2 and the membrane 71. Since the outer peripheral region includes the vicinity of the outer peripheral edge 23e, the recesses 4 provided in the outer peripheral region can store, in the recesses 4, an excess electrolyte reaching the vicinity of the outer peripheral edge 23e. In Modification 2, all of the plurality of recesses 4 are disposed outside the liquid supply manifold 25, the liquid supply slit 25s, the liquid discharge manifold 27, the liquid discharge slit 27s, and the sealing groove 29.

### <<Modification 3>>

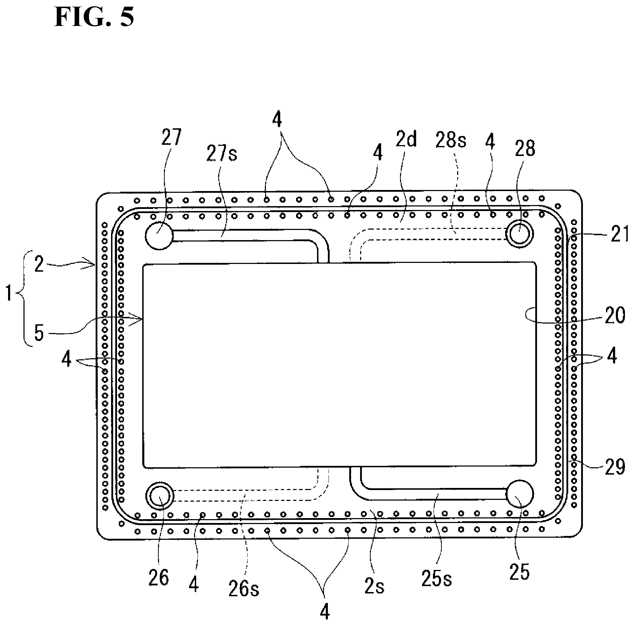

As illustrated in FIG. 5, all of the plurality of recesses 4 may be provided in the vicinity of the sealing groove 29. The plurality of recesses 4 provided in the vicinity of the sealing groove 29 may be provided at predetermined intervals along the length of the sealing groove 29. The plurality of recesses 4 provided in the vicinity of the sealing groove 29 may include pairs of recesses 4 provided at symmetrical positions with respect to the sealing groove 29. That is, the plurality of recesses 4 provided in the vicinity of the sealing groove 29 may include pairs of recesses 4 provided at positions symmetrical to the sealing groove 29. The plurality of recesses 4 provided in the vicinity of the sealing groove 29 can store an electrolyte in the recesses 4 in the vicinity of the sealing groove 29, and the electrolyte is likely to be prevented from leaking from a gap between the frame body 2 and another frame body 2 adjacent thereto to the outside of the battery cell 7.

### <Cell frame>

The cell frame 1 includes the frame body 2 described above and a bipolar plate 5 as illustrated in FIGS. 1 and 2. The bipolar plate 5 is disposed in the through-hole 20 of the frame body 2 such that an outer peripheral edge portion is supported by the frame body 2. The cell frame 1 is constituted by fitting the bipolar plate 5 in the through-hole 20 of the frame body 2. The bipolar plate 5 includes, at the portion supported by the frame body 2, a thin portion 51 formed to be thinner than other portions. This thin portion 51 is fitted in a recess constituted by the cutout 35 of the frame body 2. The cell frame 1 may be produced by molding the frame body 2 on the outer periphery of the bipolar plate 5 by injection molding.

The thickness of the bipolar plate 5 is smaller than the thickness of the frame body 2 as illustrated in FIG. 2. In a state where the bipolar plate 5 is disposed in the through-hole 20, a recess is formed by the inner peripheral surface 24 of the frame body 2 and a surface of the bipolar plate 5. This recess is provided on each of a first surface and a second surface of the bipolar plate 5. A positive electrode 72 is disposed in the recess formed by the inner peripheral surface 24 of the frame body 2, that is, the inner peripheral surface of the cutout 35 in this example, and the first surface of the bipolar plate 5. A negative electrode 73 is disposed in the recess formed by the inner peripheral surface 24 of the frame body 2 and the second surface of the bipolar plate 5. In FIG. 2, the positive electrode 72 and the negative electrode 73 are shown by the two-dot chain lines.

### <RF battery system>

An RF battery system 6 according to an embodiment will be described with reference to FIGS. 6 and 7. The RF battery system 6 is one of electrolyte-circulating storage battery systems. The RF battery system 6 includes battery cells 7 and a circulation mechanism 8 configured to circulate electrolytes through the battery cells 7. The RF battery system 6 performs charging and discharging while supplying the battery cells 7 with the electrolytes. In FIGS. 6 and 7, an illustration of recesses 4 of the frame body 2 is omitted for convenience of explanation.

The RF battery system 6 is typically connected to a power generation unit 110 and a load 130 through a transformer facility 120 and an alternating current/direct current converter 100. The RF battery system 6 performs charging by using the power generation unit 110 as a power supply source and performs discharging to the load 130 as a power supply target. Examples of the power generation unit 110 include solar photovoltaic power generators, wind power generators, and other general power plants. The load 130 is, for example, a power system or a consumer of the power. The RF battery system 6 is used, for example, for load leveling, momentary voltage drop compensation, or emergency power supply, or for smoothing the output of natural energy power generation.

### <Battery cell>

As illustrated in FIG. 6, a battery cell 7 is separated into a positive cell 7P and a negative cell 7N by a membrane 71. The positive cell 7P has a positive electrode 72 built therein. A positive electrolyte is circulated through the positive cell 7P. The positive electrode 72 is a reaction site in which an active material contained in the positive electrolyte causes battery reactions. The negative cell 7N has a negative electrode 73 built therein. A negative electrolyte is circulated through the negative cell 7N. The negative electrode 73 is a reaction site in which an active material contained in the negative electrolyte causes battery reactions. The membrane 71 is, for example, an ionexchange membrane.

As illustrated in FIG. 6 and the upper drawing of FIG. 7, the battery cell 7 includes a layered body in which a cell frame 1, a positive electrode 72, a membrane 71, a negative electrode 73, and another cell frame 1 are sequentially stacked. The battery cell 7 further includes a sealing member 75. The sealing member 75 may have an annular shape. In each cell frame 1, the positive electrode 72 is disposed on a first surface of a bipolar plate 5, and the negative electrode 73 is disposed on a second surface of the bipolar plate 5. One battery cell 7 is formed between bipolar plates 5 of two adjacent cell frames 1. The sealing member 75 is disposed between a frame body 2 and another frame body 2 adjacent thereto. The sealing member 75 is disposed in a sealing groove 29 provided on a first main surface 21. The sealing member 75 is made of a material that is easily elastically deformed, such as rubber. Such a sealing member 75 reduces the leakage of an electrolyte from the battery cell 7 even when the frame bodies 2 are made of a material such as a resin, which is less likely to be elastically deformed than the sealing member 75.

### <Cell stack>

The battery cells 7 are typically formed inside a structure called a cell stack 9. As illustrated in the lower drawing of FIG. 7, the cell stack 9 includes a substack 9s, two end plates 92, and a fastening mechanism 93. The cell stack 9 includes, for example, a plurality of substacks 9s. Each substack 9s includes a layered body and two supply/discharge plates 91. As illustrated in FIG. 6 and the upper drawing of FIG. 7, the layered body is constituted by stacking a cell frame 1, a positive electrode 72, a membrane 71, a negative electrode 73, and another cell frame 1 in this order repeatedly. As illustrated in the lower drawing of FIG. 7, the supply/discharge plates 91 are disposed on both ends of the layered body. To the supply/discharge plates 91, a supply pipe 84 and a discharge pipe 86 of a positive electrolyte circulation mechanism 8P, and a supply pipe 85 and a discharge pipe 87 of a negative electrolyte circulation mechanism 8N, which will be described later, are connected. The plurality of substacks 9s are sandwiched between the two end plates 92. The fastening mechanism 93 fastens the two end plates 92 so that the end plates 92 are closer to each other.

### <Circulation mechanism>

As illustrated in FIG. 6, a circulation mechanism 8 includes a positive electrolyte circulation mechanism 8P and a negative electrolyte circulation mechanism 8N. The positive electrolyte circulation mechanism 8P circulates a positive electrolyte through positive cells 7P. The negative electrolyte circulation mechanism 8N circulates a negative electrolyte through negative cells 7N.

The positive electrolyte circulation mechanism 8P includes a positive electrolyte tank 82, a supply pipe 84, a discharge pipe 86, and a pump 88. The positive electrolyte tank 82 stores the positive electrolyte. The supply pipe 84 and the discharge pipe 86 connect the positive electrolyte tank 82 and the positive cells 7P. The pump 88 is provided in the middle of the supply pipe 84 and pressure-feeds the positive electrolyte in the positive electrolyte tank 82 to the positive cells 7P. The positive electrolyte is supplied from the positive electrolyte tank 82 to the positive cells 7P through the supply pipe 84 and is returned from the positive cells 7P to the positive electrolyte tank 82 through the discharge pipe 86. Specifically, the positive electrolyte passing through the supply pipe 84 is supplied from the liquid supply manifold 25 illustrated in the upper drawing of FIG. 7 to the positive electrode 72 through the liquid supply slit 25s. The positive electrolyte supplied to the positive electrode 72 flows from the bottom to the top of the positive electrode 72 as shown by the arrows of the upper drawing of FIG. 7. The positive electrolyte flowing through the positive electrode 72 is discharged from the liquid discharge manifold 27 to the discharge pipe 86 through the liquid discharge slit 27s.

The negative electrolyte circulation mechanism 8N includes a negative electrolyte tank 83, a supply pipe 85, a discharge pipe 87, and a pump 89. The negative electrolyte tank 83 stores the negative electrolyte. The supply pipe 85 and the discharge pipe 87 connect the negative electrolyte tank 83 and the negative cells 7N. The pump 89 is provided in the middle of the supply pipe 85 and pressure-feeds the negative electrolyte in the negative electrolyte tank 83 to the negative cells 7N. The negative electrolyte is supplied from the negative electrolyte tank 83 to the negative cells 7N through the supply pipe 85 and is returned from the negative cells 7N to the negative electrolyte tank 83 through the discharge pipe 87. Specifically, the negative electrolyte passing through the supply pipe 85 is supplied from the liquid supply manifold 26 illustrated in the upper drawing of FIG. 7 to the negative electrode 73 through the liquid supply slit 26s. The negative electrolyte supplied to the negative electrode 73 flows from the bottom to the top of the negative electrode 73 as shown by the arrows of the upper drawing of FIG. 7. The negative electrolyte flowing through the negative electrode 73 is discharged from the liquid discharge manifold 28 to the discharge pipe 87 through the liquid discharge slit 28s.

The positive electrolyte is circulated through the positive cells 7P and the negative electrolyte is circulated through the negative cells 7N. Thus, the battery cells 7 perform charging and discharging in association with valence change reactions of active material ions in the positive and negative electrolytes.

The active material contained in the positive electrolyte, the solvent of the positive electrolyte, the active material contained in the negative electrolyte, and the solvent of the negative electrolyte are not particularly limited. The active material of the positive electrolyte is, for example, one or more selected from the group consisting of vanadium ions, manganese ions, iron ions, polyacids, quinone derivatives, amines, and organometallic complexes. The active material of the negative electrolyte is, for example, one or more selected from the group consisting of vanadium ions, titanium ions, chromium ions, polyacids, quinone derivatives, amines, and organometallic complexes. In this example, both the positive electrolyte and the negative electrolyte contain vanadium ions. Examples of the solvents of the positive electrolyte and the negative electrolyte include aqueous solutions that contain one or more acids or salts of acids selected from the group consisting of sulfuric acid, phosphoric acid, nitric acid, and hydrochloric acid.

### REFERENCE SIGNS LIST

1 cell frame
2 frame body
2s supply piece region
2d discharge piece region
11 piece region
12 corner region
   20 through-hole
21 first main surface
22 second main surface
23 outer peripheral surface
23e outer peripheral edge
24 inner peripheral surface
24e inner peripheral edge
25, 26 liquid supply manifold
25s, 26s liquid supply slit (liquid groove)
27, 28 liquid discharge manifold
27s, 28s liquid discharge slit (liquid groove)
29 sealing groove
35 cutout
4 recess
40 opening edge
5 bipolar plate
51 thin portion
6 RF battery system (redox flow battery system)
7 battery cell
7P positive cell, 7N negative cell
71 membrane
72 positive electrode, 73 negative electrode
75 sealing member
8 circulation mechanism
8P positive electrolyte circulation mechanism, 8N negative electrolyte circulation mechanism
82 positive electrolyte tank, 83 negative electrolyte tank
84, 85 supply pipe, 86, 87 discharge pipe
88, 89 pump
9 cell stack, 9S substack
91 supply/discharge plate, 92 end plate, 93 fastening mechanism
100 alternating current/direct current converter, 110 power generation unit, 120 transformer facility, 130 load
T2 maximum thickness
W2 maximum width
D4 depth
A interval
B interval
C symmetry axis
D symmetry axis

## Claims

1. A plate-like frame body for a cell frame of a battery cell, the frame body comprising:
a first main surface, and
a second main surface opposite to the first main surface,
wherein the first main surface includes
a plurality of recesses opening in the first main surface, and
a liquid groove constituting a portion of a flow channel of an electrolyte in the battery cell, and
the plurality of recesses are disposed in a distributed manner at positions different from that of the liquid groove.

2. The frame body according to claim 1, wherein the first main surface further includes a sealing groove provided in an annular shape along an entire periphery of the frame body in plan view of the first main surface such that a sealing member is disposed.

3. The frame body according to claim 1 or 2, wherein at least one of the plurality of recesses has a depth of 0.1% to 10% of a maximum thickness of the frame body.

4. The frame body according to any one of claims 1 to 3, wherein at least one of the plurality of recesses has an opening edge having a shape constituted by a curved line in plan view of the first main surface.

5. The frame body according to any one of claims 1 to 4,
wherein the frame body includes four piece regions and four corner regions,
each of the corner regions is located between two of the piece regions,
each of the piece regions includes an outer peripheral region within 50% of a maximum width of the piece region inward from an outer peripheral edge of the first main surface,
the maximum width of the piece region is a maximum length between an inner peripheral edge and an outer peripheral edge of each of the piece regions, and
at least one of the plurality of recesses is provided in the outer peripheral region.

6. The frame body according to claim 2,
wherein the frame body includes four piece regions and four corner regions,
each of the corner regions is located between two of the piece regions,
each of the piece regions includes an outer peripheral region within 50% of a maximum width of the piece region inward from an outer peripheral edge of the first main surface,
the maximum width of the piece region is a maximum length between an inner peripheral edge and an outer peripheral edge of each of the piece regions,
the sealing groove is disposed in the outer peripheral region, and
at least one of the plurality of recesses is provided in a vicinity of the sealing groove.

7. The frame body according to any one of claims 1 to 6,
wherein the frame body includes four piece regions and four corner regions,
each of the corner regions is located between two of the piece regions,
each of the piece regions includes an inner peripheral region within 50% of a maximum width of the piece region outward from an inner peripheral edge of the first main surface,
the maximum width of the piece region is a maximum length between an inner peripheral edge and an outer peripheral edge of each of the piece regions, and
at least one of the plurality of recesses is provided in the inner peripheral region.

8. The frame body according to any one of claims 1 to 7, wherein at least two of the plurality of recesses are provided at symmetrical positions with respect to a through-hole provided in the frame body.

9. The frame body according to any one of claims 1 to 8, wherein at least one of the plurality of recesses is provided in a vicinity of the liquid groove.

10. The frame body according to any one of claims 1 to 9, further comprising a manifold constituting a portion of the flow channel of the electrolyte, and
at least one of the plurality of recesses is provided in a vicinity of the manifold.

11. The frame body according to any one of claims 1 to 10, wherein at least one of the plurality of recesses has an opening area of 7 mm² to 7,855 mm².

12. The frame body according to any one of claims 1 to 11, wherein, in plan view of the first main surface, the number of opening edges of each of the recesses is one.

13. A cell frame comprising:
the frame body according to any one of claims 1 to 12; and
a bipolar plate supported by the frame body.

14. A battery cell comprising:
the cell frame according to claim 13.

15. A cell stack comprising:
the battery cell according to claim 14.

16. A redox flow battery system comprising:
the battery cell according to claim 14 or the cell stack according to claim 15.
